# EUROPEAN PATENT APPLICATION

(11) **EP 4 358 061 A1**
(43) Date of publication of application: **24.04.2024**
(21) Application number: 22202555.3
(22) Date of filing: 19.10.2022
(51) Int. Cl.: G08G 1/16, G01S 13/931

(54) **VEHICLE OBJECT DETECTION SYSTEM AND METHOD FOR DETECTING A TARGET OBJECT IN A DETECTION AREA LOCATED BEHIND AND LATERAL OF A SUBJECT VEHICLE**

(71) Applicant: Continental Autonomous Mobility Germany GmbH, 85057 Ingolstadt (DE); Toyota Jidosha Kabushiki Kaisha, Aichi-Ken 471-8571 (JP)
(72) Inventor: HASHIMOTO, Yuki, 339780 Singapore (SG); S, Premkumar, 339780 Singapore (SG); FUKUTA, Junya, Toyota-shi, 471-8571 (JP); SHIMAZU, Hiroki, Toyota-shi, 471-8571 (JP); TAKEUCHI, Koji, Toyota-shi, 471-8571 (JP)
(74) Representative: Kilian Kilian & Partner mbB

(57) **Abstract**

The invention relates to a vehicle object detection system for detecting a target object in a detection area located behind and/or lateral of a subject vehicle, the vehicle object detection system comprising: judging means configured to judge whether a target object which has been detected in the detection area is an alert object, and to output a result of judgement to warning means which is configured to output a warning to a driver of the subject vehicle that a target object is present in the detection area based on the judging means judging the target object to be an alert object, wherein the judging means is configured to judge, in response to the subject vehicle being detected to make or have made a turn, whether the target object detected in the detection area is an alert object based on a trailing trajectory of the subject vehicle being a calculated trajectory the subject vehicle has passed during turning and/or after turning, and further based on a current relative position of the target object with respect to the subject vehicle.

Moreover, the invention relates to a corresponding method for detecting a target object in a detection area located behind and/or lateral of a subject vehicle, particularly for controlling a vehicle object detection system according to the invention.

## Description

### TECHNICAL FIELD

The invention relates to a vehicle object detection system, preferably a lane change assist system, for detecting a target object like a vehicle in a detection area located behind and/or lateral of a subject vehicle.

Furthermore, the invention relates to a computer-implemented method for detecting a target object like a vehicle in a detection area located behind and/or lateral of a subject vehicle, particularly for controlling such a vehicle object detection system.

Moreover, the invention relates to a driver assistance system for a vehicle, comprising such a vehicle object detection system, a corresponding computer program for carrying out the computer-implemented method and a respective non-transitory computer-readable medium.

### BACKGROUND

Conventional Driver Assistance Systems or Advanced Driver Assistance Systems (ADAS) for vehicles are widely used, for example, in connection with conventional vehicles as well as autonomous vehicles, and usually comprise such vehicle object detection systems.

Many vehicle accidents are caused by human error, which might have been avoided by means of such Advanced Driver Assistance Systems. Commonly known safety-critical ADAS applications include pedestrian detection/avoidance, lane departure warning/correction or lane change assist, traffic sign recognition, automatic emergency braking, (rear-)-cross-traffic alert, and blind spot detection (BSD), for example.

In connection with (rear-)-cross-traffic alert, the respective rear cross traffic alert (RCTA) system often uses the same detecting means like a radar infrastructure as the one used for detecting vehicles in the blind spot (BSD).

For example, long range radars/ long range radar sensors are usually used for applications like emergency brake assist and adaptive cruise control, while short-range-radars are often employed in connection with applications like blind spot detection (BSD), rear-cross-traffic-alert, Lane Change Assist (LCA) and rear pre-crash systems, for example.

For example, the Lane Change Assist may support the driver when changing lanes in case of parallel adjacent lanes or, for example, when making a turn from one lane into another lane being perpendicular to the one lane, by outputting a warning in case of a potential collision with fast overtaking or crossing vehicles and with those moving in the blind spot of the subject vehicle. The warning for avoiding the potential collision may be a cascaded feedback including a visual and a haptical warning. In Active Lane Change Assist systems (ALCA systems), such a warning may be followed by a limited steering or braking torque in order to keep the subject vehicle away from the potential colliding other vehicle.

For example, if the subject vehicle drives straight on its own lane, the LCA system detects target objects like other vehicles, coming from behind the subject vehicle and driving on adjacent lanes being adjacent to the own lane of the subject vehicle, and outputs a warning in case of a potential collision.

Nevertheless, the warning decision algorithm of the LCA system needs to be improved to suppress superfluous warnings when the subject vehicle is turning, i.e., making a turn into another lane, different to a lane change between two parallel lanes. This is because, when the subject vehicle is turning and a target object, e.g., another vehicle, is coming from an intersecting/crossing direction, it is difficult for the LCA system to distinguish whether a potential collision object is in one of the adjacent lanes, in other lanes, or in the own lane of the subject vehicle, and whether or not there is a danger situation. In particular, it is difficult for the LCA system to judge, when subject vehicle is turning at an intersection, for example, whether a target vehicle coming from a crossing direction is about to pass through side of the subject vehicle, in which situation a warning should be output, or whether a target vehicle is just running behind the subject vehicle, in which situation no warning should be output. In such a case, if a ALCA system is employed, it would additionally be very uncomfortable for the driver if the system intervenes steering maneuvering, while subject vehicle is turning.

### SUMMARY OF THE INVENTION

A vehicle object detection system according to the invention is preferably a lane change assist system (LCA), and is for detecting a target object like another vehicle in a detection area located behind and/or lateral of a subject vehicle, the vehicle object detection system comprising: judging means configured to judge whether a target object which has been detected in the detection area is an alert object, and to output a result of judgement to warning means which is configured to output a warning to a driver of the subject vehicle that a target object is present in the detection area based on the judging means judging the target object to be an alert object, wherein the judging means is configured to judge, in response to the subject vehicle being detected to make or have made a turn, whether the target object detected in the detection area is an alert object based on a trailing trajectory of the subject vehicle, being a calculated trajectory the subject vehicle has passed during turning, and/or after turning, and further based on a current relative position of the target object with respect to the subject vehicle.

Accordingly, one advantageous effect achieved by the invention is that unnecessary alarm warnings/activations can be avoided. In particular, by improving a warning decision/judging algorithm of a LCA system (Lane Change Assist system), suppression of unnecessary outputs of warnings, when the subject vehicle makes or has made a turn, is possible by taking into consideration a movement path, i.e. the trailing trajectory, of the subject vehicle during and after making a turn as well as the current position of another target vehicle as target object.

According to the invention, the judging means takes into account the turning situation of the subject vehicle by evaluating the shape of the trailing trajectory of the subject vehicle. Additionally, the turning situation of the subject vehicle may be further evaluated by a current yaw rate, a curve radius and so on. In other words, according to the invention, history data reflecting the calculated trajectory the subject vehicle has passed during turning and/or after turning (i.e. the past history concerning the movement path of the subject vehicle) is taken into account for the judgment whether the target object is an alert object or not an alert object, i.e. no alert object, on the basis of which judgement a warning or no warning is output. By means of this, unnecessary warnings can be suppressed not only while the subject vehicle is turning but also after having made a turn.

According to various embodiments, the judging means may be formed by, or may include, a judging processor.

The vehicle object detection system according to the invention can be further modified in such a way that the judging means is configured to determine that the target object is not an alert object, based on a distance in a transverse direction of the subject vehicle between the current relative position of the target object and a position of a point on the trajectory the subject vehicle previously passed being larger than a specified value. Accordingly, by appropriately setting the specified value, a target object like another vehicle can be determined to be not an alert object, if its respective distance to the trajectory is larger than the specified value. Thus, an unnecessary warning can be suppressed.

Furthermore, the vehicle object detection system according to the invention can be further modified in such a way that the judging means is configured to determine that the target object is not an alert object, further based on an angle between a direction of a moving vector of the target object detected to be located behind the subject vehicle and longitudinal axis of the subject vehicle being less than a specified angle. Taking also into consideration the moving vector or moving direction of the target object enhances accuracy of the vehicle object detection system, i.e. the determination whether the target object is not an alert object.

Additionally, the vehicle object detection system according to the invention can be further modified in such a way that the judging means comprises calculating means which is configured to calculate the trailing trajectory of the subject vehicle on the basis of motion parameters of the subject vehicle, including at least one of a change of position of the subject vehicle, a velocity of the subject vehicle, an acceleration of the subject vehicle, a yaw rate of the subject vehicle, steering angle of the subject vehicle and a curve radius.

Moreover, the vehicle object detection system according to the invention can be further realized in such a way that the vehicle object detection system further comprises storing means configured to store the trailing trajectory, the trailing trajectory being stored from a position of the subject vehicle at a current point in time to a position of the subject vehicle at a specified point in time in the past and/or the trailing trajectory being stored over a specified length measured from the current position of the subject vehicle. In other words, the trailing trajectory is stored, as history data, in the storing means either for a specific time frame from a current point in time to a point in time in the past or for a predetermined length, i.e. the trailing trajectory starting at the current position of the subject vehicle is stored for predetermined length, wherein point of the trajectory beyond this predetermined length are removed from the storing means. Accordingly, it is possible to set the amount of history data storing the trailing trajectory to an extent according to the needs.

Additionally, the vehicle object detection system according to the invention can be further modified in such a way that the judging means is configured to output a result of judgement to the warning means which result of judgement indicates to the warning means not to output a warning even if a target object has been detected, based on the judging means judging the target object to be not an alert object. That is, according to the invention, output of a warning is suppressed even if a target object is detected so that unnecessary warnings can be avoided or at least reduced.

A driver assistance system according to the invention is for a subject vehicle and comprises detecting means configured to detect a target object in a detection area located behind and/or lateral of the subject vehicle, a vehicle object detection system according to the invention as outlined above, and warning means configured to warn a driver of the subject vehicle that a target object is present in the detection area only based on the judging means of the vehicle object detection system judging the target object to be an alert object.

The driver assistance system according to the invention can be further configured in such a way that the detecting means comprises at least two sensors, preferably at least two radar sensors, like two short range radar sensors, configured to detect a target object in the detection area. For example, short range radar sensors (SRR sensors) may be used which can detect objects at maximum of 100m.

A vehicle according to the invention is preferably an autonomous vehicle and comprises a driver assistance system according to the invention as outlined above, wherein the one sensor is located at a left rear edge/region of the vehicle and the other sensor is located at a right rear edge/region of the vehicle.

A computer-implemented method according to the invention is for detecting a target object like a vehicle in a detection area located behind and/or lateral of a subject vehicle, particularly for controlling a vehicle object detection system according to the invention as outlined above, wherein the method comprises the following steps:
judging whether a target object which has been detected in the detection area is an alert object, and outputting a result of judgement to warning means which is configured to output a warning to a driver of the subject vehicle that a target object is present in the detection area based on the judgement that the target object is an alert object, wherein it is judged, in response to the subject vehicle being detected to make or have made a turn, whether the target object detected in the detection area is an alert object based on a trailing trajectory of the subject vehicle, being a calculated trajectory the subject vehicle has passed during turning and/or after turning, and further based on a current relative position of the target object with respect to the subject vehicle.

Accordingly, the properties and advantages explained in connection with the vehicle object detection system according to the invention arise in the same or similar manner in respect of the method for detecting a target object in a detection area located behind and/or lateral of a subject vehicle according to the present invention, which is why, in order to avoid repetitions, reference is made to the respective explanations with respect to the vehicle object detection system according to the invention.

A computer program according to the invention comprises instructions which, when the program is executed by a computer or a processor, cause the computer or processor to carry out the above-mentioned computer-implemented method according to the invention.

A non-transitory computer-readable medium according to the invention has stored thereon the above-mentioned computer program according to the invention.

### BRIEF DESCRIPTION OF THE DRAWINGS

A preferred embodiment and advantages of the invention will become more apparent upon reading the following detailed description along with the accompanying drawings in which:
FIG. 1 shows one embodiment of a vehicle according to the invention provided with a driver assistance system according to the invention in a concrete driving turning situation;
FIG. 2 shows, in more detail, a schematic configuration of the driver assistance system according to the invention of FIG. 1.

### DETAILED DESCRIPTION

In this context, the vehicle object detection system as described in this description may include a memory which is for example used in the processing carried out in the vehicle object detection system. A memory used in the embodiments may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory).

In this context, the vehicle object detection system as described in this description may include a processor or a "circuit". A "circuit" may be understood as any kind of a logic implementing entity, which may be special purpose circuitry or a processor executing software stored in a memory, firmware, or any combination thereof. Thus, in an embodiment, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be a processor executing software, e.g. any kind of computer program, e.g. a computer program using a virtual machine code such as e.g. Java. Any other kind of implementation of the respective functions which will be described in more detail below may also be understood as a "circuit" in accordance with an alternative embodiment.

With reference to the drawings, one preferred embodiment of the present invention will now be specifically described for illustrative purposes. It is to be understood that components or elements in this embodiment will be shown and described by way of examples only, but are not intended to limit this invention to them.

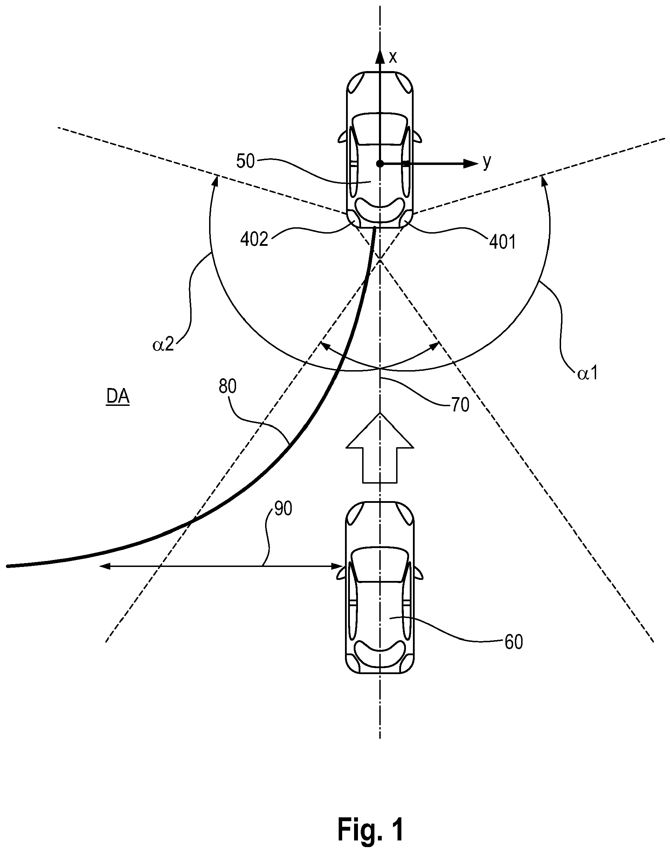

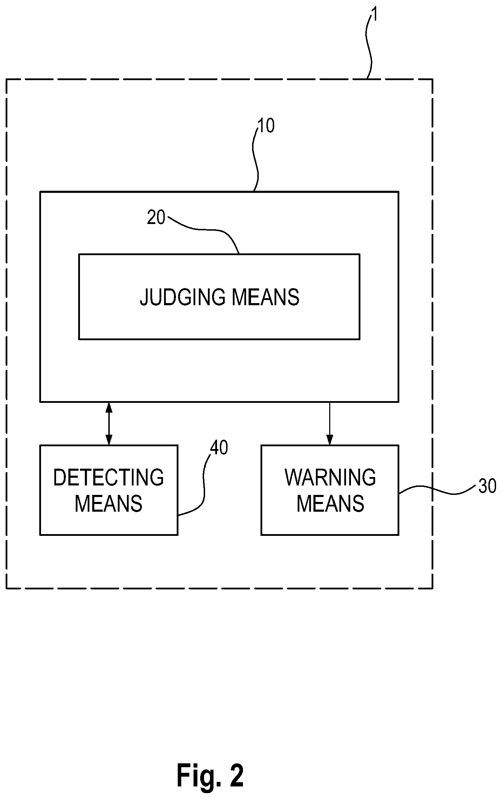

FIG. 1 shows one embodiment of a vehicle 50 according to the invention provided with a driver assistance system 1 according to the invention in a driving turning situation, which driver assistance system 1 will be described in more concrete terms in connection with FIG. 2.

FIG. 2 shows, in more detail, a schematic configuration of the driver assistance system 1 according to the invention of FIG. 1.

As can be gathered from FIG. 2, the driver assistance system 1 provided in the subject vehicle 50 comprises a vehicle object detection system 10 according to the invention, detecting means 40 and warning means 30.

The detecting means 40 is configured to detect a target object 60 like another vehicle in a detection area DA located behind and lateral of the subject vehicle and will be described in more concrete terms below.

In this embodiment, the detecting means 40 comprises at least two sensors 401, 402 which are radar sensors, in particular two short range radar sensors configured to detect a target object 60 in the detection area DA. Alternatively, the detection means 40 may also comprise camera sensor which are preferably used in combination with the radar sensors 401, 402.

In more concrete terms, the radar sensors 401, 402 may be part of a conventional lane change assist system, for example, and are - in this specific embodiment - short range radar sensors 401, 402 which are capable of detecting at least a relative position of the target object 60 (target vehicle) and other objects with respect to the subject vehicle 50, a relative speed/velocity of the target object 60 with respect to the subject vehicle 50, an absolute velocity and acceleration of the target object 60, respectively, and so on.

Accordingly, as can be gathered from FIG. 1, the two short range radar sensors 401, 402 are each for detecting a target object 60 in the detection area DA, wherein the one sensor 402 is located at a left rear edge/region of the vehicle 50 and the other sensor 401 is located at a right rear edge/region of the vehicle 50. Thus, each sensor 401, 402 monitors/detects, due to its respective field of view (FoV) α₁ and α₂, a different detectable area included in a respective field of view of the respective sensor 401, 402 on both sides of the subject vehicle 50.

The warning means 30 is configured to warn a driver of the subject vehicle 50 that a target object 60 is present in the detection area DA. For example, the warning means 30 may be a conventional visual or acoustic indicator (display or speaker) capable of notifying the driver of the subject vehicle 50 that the target object 60 is present in the detection area DA. In this embodiment, the warning means 30 warns the driver of the subject vehicle 50 that a target object 60 is present in the detection area DA only if judging means 20 of the vehicle object detection system 10, explained below, judged the target object 60 to be an alert object.

The vehicle object detection system 10 is for detecting or processing of detection of the target object 60 in the detection area DA located behind and lateral of the subject vehicle 50 and comprises the judging means 20 as mentioned above. The vehicle object detection system 10 may, for example, be implemented by a processor or computer, which has stored several programs for carrying out the function(s) of the judging means 20 and also conventional functions.

The judging means 20, which may be formed by a processor, referred to as judging processor, is configured to judge or to generate a judgement whether a target object 60 which has been detected in the detection area DA is an alert object, and to output a result of judgement to the warning means 30. In turn, the warning means 30 is configured to output a warning to a driver of the subject vehicle 50 that a target object 60 is present in the detection area DA only if the judging means judged the target object 60 to be an alert object.

In this embodiment, the judging means 20 is configured to judge, if the subject vehicle 50 is detected to make or have made a turn, whether the target object 60 detected in the detection area DA is an alert object or not an alert object, i.e. no alert object, on the basis of whether two conditions, i.e. a first condition and a second condition, are satisfied and to judge, if the two conditions are determined to be satisfied, the target object 60 to be not an alert object. In this connection, the detection that the subject vehicle 50 makes or has made a turn may be performed by means of detecting the current and past steering angle of the subject vehicle 50, for example.

The judgement of the respective first and second conditions will now be described in more detail below:
The judging means 20 is configured to determine a first condition to be satisfied or not, based on a trailing trajectory 80 of the subject vehicle 50, being a calculated trajectory the subject vehicle 50 has passed during turning and/or after turning, and a current relative position of the target object 60 (the target vehicle) with respect to the subject vehicle 50 (first condition).

In more detail, the judging means 20 determines the first condition of the trailing trajectory 80 of the subject vehicle 50 and the current relative position of the target object 60 to be satisfied if a distance 90 in a transverse direction of the subject vehicle 50 between the current relative position of the target object 60 and a position of a point on the trajectory 80 the subject vehicle 50 previously passed is larger than a specified value.

That is, in more concrete terms, as can be gathered from FIG. 1, the trajectory 80 the subject vehicle 50 previously passed during and after turning is assumed to lie in an x-y-plane of the conventional vehicle coordinate system also indicated in FIG. 1. Thus, the distance 90 in the transverse direction of the subject vehicle 50 is a distance measured in the y-direction of the conventional vehicle coordinate system. The distance 90 is defined by two points. One (target object detection) point is located at the current detection position of the target object 60, i.e. the target vehicle, while the other (trajectory intersection) point is located on the trajectory 80 on the same x-coordinate like the target object detection point. In conclusion, the distance 90 is defined by the distance between the respective y-coordinates of both points, and specified by the x-coordinate of the target object detection point. In other words, the trajectory intersection point is obtained by first detecting the target object 60 at a specific position having specific x- and y-coordinates, and then drawing a line from said specific position of the target object 60 in the y-direction (in FIG. 1, the negative y-direction) until the line intersects with the trajectory 80 at the trajectory intersection point.

As can be gathered from FIG.1, the distance in the transverse direction of the subject vehicle 50 between a longitudinal axis of the subject vehicle 50 and the trajectory 80 of the subject vehicle 50 increases with increasing distance from the subject vehicle 50 in the longitudinal direction of the subject vehicle 50 (negative direction of x-axis in FIG. 1) and decreases with decreasing distance from the subject vehicle 50 in the longitudinal direction of the subject vehicle 50 (positive direction of x-axis in FIG. 1).

In this connection, the trailing trajectory 80 of the subject vehicle 50 is calculated, by means of calculating means of the judging means 20, for example, on the basis of motion parameters of the subject vehicle, including at least one of a change of position of the subject vehicle 50, a velocity of the subject vehicle 50, an acceleration of the subject vehicle 50, a yaw rate of the subject vehicle 50, steering angle of the subject vehicle 50 and a curve radius. For example, the vehicle object detection system 10 may further comprises storing means configured to store the trailing trajectory 80 calculated on the basis of one or more of the above parameters, wherein the trailing trajectory 80 may be stored from a location/position of the subject vehicle 50 at a current point in time to a location/position of the subject vehicle 50 at a specified point in time in the past or, alternatively, the trailing trajectory 80 may be stored over a specified length measured from the current position of the subject vehicle 50.

Moreover, the judging means 20 is further configured to determine a second condition to be satisfied if an angle between a direction of a moving vector of the target object 60 detected to be located behind the subject vehicle 50 and a longitudinal axis of the subject vehicle 50 is less than a specified angle. In this case, the moving direction of the subject vehicle 50 and the target object 60 as target vehicle is assumed to line in the x-y-plane of the conventional vehicle coordinate system. Therefore, both moving vectors also lie in the x-y-plane of the conventional vehicle coordinate system, wherein the longitudinal axis of the subject vehicle 50 corresponding to the x-axis of the conventional vehicle coordinate system and the moving vector of the target vehicle as the target object 60 are arranged at a certain angle to each other. In other words, the target object 60 like the target vehicle is detected in such a manner that the target vehicle's moving vector relative angle to the subject vehicle's axis should be within a specified angle range in accordance with the second condition.

For example, the moving vector including the moving direction of the target vehicle as the target object 60 may be calculated, by means of calculating means included in the judging means 20, on the basis of detected motion parameters, i.e. the longitudinal and lateral velocities of the target vehicle as the target object 60.

Accordingly, the judging means 20 is configured to, if the subject vehicle 50 is detected to make or have made a turn as shown in FIG. 1, for example, judge that the target object 60 is not an alert object if all evaluated conditions, i.e. both the first and second conditions, are satisfied. In this case, the judging means 20 outputs a result of judgement to the warning means 30 which result of judgement indicates to the warning means 30 not to output a warning even if a target object 60 has been detected, if the judging means 20 judged the target object 60 (the target vehicle) to be not an alert object.

Next, one example of operation of the driver assistance system 1 provided with the vehicle object detection system 10 is described on the basis of FIG. 1.

As can be seen in FIG. 1, the subject vehicle 50 is driving forward and has made a turn, i.e. the subject vehicle 50 moved along the trajectory 80 during turning. In the example of FIG. 1, a typical situation is shown, in which the subject vehicle makes a turn form an own lane into another lane being perpendicular to the own lane, for example, due to a traffic junction or traffic crossing.

Moreover, a target vehicle as target object 60 is driving forward directly behind the subject vehicle 50, which is detected by the vehicle object detection system 10 as target object 60 present in the detection area DA.

Then, the judging means 20 evaluates whether the first and second conditions are satisfied.

In this case, the first and second conditions are satisfied. That is, in more concrete terms, both the conditions are determined to be satisfied as the distance between the respective positions on the trailing trajectory 80 of the subject vehicle 50 and the position of the target vehicle as the target object 60 is larger than the specified value, and the angle between the direction of a moving vector of the target vehicle and the longitudinal axis of the subject vehicle 50 is less than a specified angle, i.e. less than +/- 2 degree with respect to the longitudinal axis of the subject vehicle 50.

Accordingly, as all the first and second conditions are fulfilled in this case, the judging means 20 judges the target object 60 to be no alert object for the time being so that the warning means 30 will not output a warning even if a target object 60 has been detected in the detection area DA. This is because the target object 60 detected and fulfilling all first and second conditions is considered to be an object far away from the subject vehicle 50 and causing no collision danger for the time being. For example, in such a situation, it is difficult for the vehicle object detection system 10 (being a LCA system) to differentiate the situation where target object 60 being the target vehicle is considered as overtaking the subject vehicle 50 on one of adjacent lanes or where target object 60 drives on the same lane as the subject vehicle 50 in far distance from the subject vehicle 50. For example, a delay time for delaying an output of a warning might be set in a next step. In this connection, the delay time is used to enable the vehicle object detection system 10 to differentiate whether the target object is an overtaking target, which would trigger a warning (the target object 60 then being considered as warning-relevant target) or whether the target object 60 is a succeeding target object behind subject vehicle (the target object 60 then being considered as not warning-relevant target). After elapse of the delay time, the warning means 30 is enabled to output a warning again, if the judging means judges a target object 60 to be an alert object.

For example, the vehicle object detection system (LCA system) outputs a warning in case the target object 60 being the target vehicle is considered as overtaking the subject vehicle 50 on one of adjacent lanes.

The features of the invention disclosed in the foregoing description, in the drawings as well as in the claims may be essential for the realization of the invention both individually and in any combination.

## Claims

1. A vehicle object detection system (10), preferably a lane change assist system, for detecting a target object (60) in a detection area (DA) located behind and/or lateral of a subject vehicle (50), the vehicle object detection system (10) comprising:
judging means (20) configured to judge whether a target object (60) which has been detected in the detection area (DA) is an alert object, and to output a result of judgement to warning means (30) which is configured to output a warning to a driver of the subject vehicle (50) that a target object (60) is present in the detection area (DA) based on the judging means judging the target object (60) to be an alert object,
wherein the judging means (20) is configured to judge, in response to the subject vehicle (50) being detected to make or have made a turn, whether the target object (60) detected in the detection area (DA) is an alert object based on a trailing trajectory (80) of the subject vehicle (50) being a calculated trajectory (80) the subject vehicle has passed during turning and/or after turning, and further based on a current relative position of the target object (60) with respect to the subject vehicle (50).

2. The vehicle object detection system (10) according to claim 1, wherein the judging means (20) is configured to determine that the target object (60) is not an alert object, based on a distance in a transverse direction of the subject vehicle (50) between the current relative position of the target object (60) and a position of a point on the trajectory (80) the subject vehicle (50) previously passed being larger than a specified value.

3. The vehicle object detection system (10) according to claim 1 or 2, wherein the judging means (20) is configured to determine that the target object (60) is not an alert object, further based on an angle between a direction of a moving vector of the target object (60) detected to be located behind the subject vehicle (50) and longitudinal axis of the subject vehicle (50) being less than a specified angle.

4. The vehicle object detection system (10) according to any of claims 1 to 3, wherein the judging means (20) comprises calculating means which is configured to calculate the trailing trajectory (80) of the subject vehicle (50) on the basis of motion parameters of the subject vehicle (50), including at least one of a change of position of the subject vehicle (50), a velocity of the subject vehicle (50), an acceleration of the subject vehicle (50), a yaw rate of the subject vehicle (50), steering angle of the subject vehicle (50) and a curve radius.

5. The vehicle object detection system (10) according to any of claims 1 to 4, wherein the vehicle object detection system (10) further comprises storing means configured to store the trailing trajectory (80), the trailing trajectory (80) being stored from a position of the subject vehicle (50) at a current point in time to a position of the subject vehicle (50) at a specified point in time in the past and/or the trailing trajectory (80) being stored over a specified length measured from the current position of the subject vehicle.

6. The vehicle object detection system (10) according to any of the preceding claims, wherein the judging means (20) is configured to output a result of judgement to the warning means (30) which result of judgement indicates to the warning means (30) not to output a warning even if a target object has been detected, based on the judging means (20) judging the target object (60) to be not an alert object.

7. A driver assistance system (1) for a subject vehicle (50), comprising:
detecting means (40) configured to detect a target object (60) in a detection area (DA) located behind and/or lateral of the subject vehicle (50),
a vehicle object detection system (10) according to any of claims 1 to 6, and
warning means (30) configured to warn a driver of the subject vehicle that a target object (60) is present in the detection area (DA) based on the judging means (20) of the vehicle object detection system (10) judging the target object (60) to be an alert object.

8. The driver assistance system (1) according to claim 7, wherein the detecting means (40) comprises at least two sensors (401, 402), preferably at least two radar sensors, like two short range radar sensors, configured to detect a target object (60) in the detection area (DA).

9. A computer-implemented method for detecting a target object (60) in a detection area (DA) located behind and/or lateral of a subject vehicle (50), particularly for controlling a vehicle object detection system (10) according to any one of claims 1 to 6, wherein the method comprises the following steps:
judging whether a target object (60) which has been detected in the detection area (DA) is an alert object, and outputting a result of judgement to warning means (30) which is configured to output a warning to a driver of the subject vehicle (50) that a target object (60) is present in the detection area (DA) based on the judgement that the target object (60) is an alert object,
wherein it is judged, in response to the subject vehicle (50) being detected to make or have made a turn, whether the target object (60) detected in the detection area (DA) is an alert object based on a trailing trajectory (80) of the subject vehicle (50) being a calculated trajectory (80) the subject vehicle has passed during turning and/or after turning, and further based on a current relative position of the target object (60) with respect to the subject vehicle (50).

10. A computer program comprising instructions which, when the program is executed by a computer, cause the computer to carry out the computer-implemented method of claim 9.

11. A non-transitory computer-readable medium having stored thereon the computer program of claim 10.
